# EUROPÄISCHE PATENTSCHRIFT

(11) **EP 1 979 202 B1**
(45) Veröffentlichungstag und Bekanntmachung des Hinweises auf die Patenterteilung: **06.05.2020**
(21) Anmeldenummer: 07711130.0
(22) Anmeldetag: 12.01.2007
(51) Int. Cl.: B60R 21/015

(54) **VERFAHREN UND KONTROLLSYSTEM FÜR SCHLIESSKLAPPEN**
METHOD AND MONITORING SYSTEM FOR CLOSING COVERS
PROCÉDÉ ET SYSTÈME DE COMMANDE POUR UN BATTANT DE FERMETURE

(30) Priorität: 12.01.2006 DE 102006001666
(43) Veröffentlichungstag der Anmeldung: 15.10.2008
(73) Patentinhaber: Microchip Technology Germany GmbH, 82205 Gilching (DE)
(72) Erfinder: RICHTER, Wolfgang, 82319 Starnberg (DE)
(74) Vertreter: sgb europe
(86) Internationale Anmeldenummer: PCT/DE2007/000033
(87) Internationale Veröffentlichungsnummer: WO 2007/079728

(56) Entgegenhaltungen:
- EP-A- 1 002 920
- EP-A- 1 564 357
- EP-A1- 1 457 391
- WO-A-2004/071815
- DE-A1- 19 701 899
- JP-A- 2005 022 629
- US-A1- 2002 080 014
- US-A1- 2002 154 039

## Beschreibung

Die Erfindung richtet sich auf ein Verfahren und ein Kontrollsystem für automatisch betätigte, insbesondere kraftbetriebene Schließklappen, beispielsweise Kofferraumdeckel von Kraftfahrzeugen. Weiterhin richtet sich die Erfindung auch auf ein Verfahren und ein Detektionssystem zur Präsenzerfassung an sich.

Der Wettbewerb im KfZ-Bereich zwingt die Hersteller dazu, ihren Kunden mehr Komfort anzubieten. Dazu gehört unter anderem, dass sich Heck- und Kofferraumdeckel von Kraftfahrzeugen per Knopfdruck automatisch öffnen und schließen lassen, wobei diese Vorgänge typischerweise kraftbetrieben (elektrisch, pneumatisch, hydraulisch, oder ein Federsystem) unterstützt werden.

Da die Kräfte beim Öffnen oder Schließen von Heckdeckeln und Kofferraumklappen nicht unbeachtlich sind, müssen Personen vor dem Einklemmen und Gegenstände vor Beschädigung geschützt werden. Sensoren sollen helfen, einen sicheren von einem unsicheren Zustand klar zu differenzieren und entsprechende Maßnahmen, wie z.B. stoppen oder reversieren eines bewegten Fahrzeugteils einzuleiten. Dies wurde bisher z.B. durch taktile Dichtungsleisten erreicht, bei deren Betätigung ein elektrischer Kontakt geschlossen wird. Aufgrund der Masseträgheit der schließenden oder öffnenden Klappen kann durch solche Konzepte nur bedingt ein Sicherheitsgewinn erreicht werden, da diese erst beim Einklemmen einer Person oder eines Gegenstandes wirken. Deshalb ist der Wunsch nach Systemen aufgetreten, die im Vorfeld eine Verletzung von Personen ausschließen

Das Dokument US2002/154039 A1 offenbart ein kapazitives Detektionssystem mit drei Elektroden für eine Schiebetür.

Der Erfindung liegt die Aufgabe zugrunde, Lösungen anzugeben durch welche ein zuverlässiges Sicherungssystem realisiert werden kann.

Diese Aufgabe wird erfindungsgemäß gelöst durch ein Detektionssystem gemäß Anspruch 1.

Dadurch wird es auf vorteilhafte Weise möglich, die Annäherung menschlicher Gliedmaßen an einen gefährdungsrelevanten Bewegungsbahnbereich eines Objektes, insbesondere Kofferraumdeckel zu erfassen und Einfluss auf die Bewegung des Objektes zu nehmen um eine Kollision der Gliedmaßen mit dem Objekt zu vermeiden.

Gemäß einer besonders bevorzugten Ausführungsform der Erfindung sind die Feldbereitungselektrodenstruktur und die Erfassungselektrodenstruktur im Schließspaltbereich eines Kofferraumdeckels angeordnet sind. Es ist dabei möglich, Die Feldbereitungselektrodenstruktur und die Erfassungselektrodenstruktur in eine Deckel-Dichtungseinrichtung zu integrieren.

Die Feldbereitungselektrodenstruktur und die Erfassungselektrodenstruktur können aus einem leitfähigen Kunststoffmaterial gefertigt sein. Dieses Kunststoffmaterial kann Bestandteil der Dichtungseinrichtung bilden. Es ist möglich, die Dichtungseinrichtung als Extrusionsprofil mit integrierten Elektrodenzonen zu fertigen.

Es ist möglich, die Modulationseinrichtung derart an die Abschirmungsstruktur anzukoppeln, dass an diese eine hinsichtlich Phasenlage und Spannungsabstand gegenüber der Erfassungselektrodenstruktur und/oder der Feldbereitungsstruktur modulierte Spannung anlegbar ist. Dadurch wird es möglich, die räumliche Gestalt des Detektionsbereiches und/oder des Anregungsfeldes über den Abstand der an diesen Elektrodensystemen anliegenden Spannungen zu gestalteten, insbesondere hinsichtlich ihrer Ausrichtung zu variieen

Eine besonders günstige Formbarkeit der jeweiligen Feldräume wird erreicht, indem die Erfassungselektrodenstruktur und/oder der Feldbereitungselektrodenstruktur mehrere Abschirmelektroden zugeordnet sind und dass durch Abstimmung des Abstandes der Spannungen an den jeweiligen Abschirmelektroden die Gestalt, und/oder die Ausrichtung des Anregungs- oder Detektionsbereiches variiert wird.

Auf Grundlage des erfindungsgemäßen Konzeptes wird insbesondere eine Kofferraumdeckeleinrichtung für ein Kraftfahrzeug geschaffen, mit einem innerhalb eines Kofferraumdeckelbahnraumes verlagerbaren Kofferraumdeckel, einem Bewegungsmechanismus zur Führung des Kofferraumdeckels in jenem Kofferraumdeckelbahnraum und einem Detetektionssystem der vorgenannten Art, wobei im Falle eines seitens des Detektionssystems erfassten und als gefährdungsrelevant zu klassifizierten Präsenzzustands eines Objektes der Bewegungsmechanismus in einen Betriebszustand verbracht wird in welchem ein Verletzungsrisiko infolge der Bewegung des Kofferraumdeckels vermieden, oder abgesenkt ist.

Die Erfindung richtet sich weiterhin auch auf ein Verfahren zur Detektion der Annäherung vitaler Objekte an Bewegtkomponenten bei welchen kontinuierlich, oder in hinreichend kleinen Zeitabständen ein durch eine Annäherung des vitalen Objektes an die Bewegtkomponente geprägter Näherungszustand auf Grundlage feldelektrischer Wechselwirkungseffekte erfasst wird, wobei anhand abfolgend erfasster Näherungszustände die Dynamik der Näherungszustandsänderung ermittelt wird und anhand einer Korrelation der der Dynamik der Näherungszustandsänderung mit einer durch die Bewegung der Bewegtkomponente geprägten Referenzdynamik der Näherungszustand klassifiziert wird.

Die Klassifikation kann mit dem Ziel erfolgen, festzustellen, ob- und ggf. in welcher Form ein Gefährdungszustand vorliegt. Die Klassifikation kann angeben, ob eine Objektnäherung, oder eine Objektentfernung stattfindet. Anhand der Dynamik der Objektnäherung kann ein Sicherheitsbetriebsablauf abgestimmt werden. So ist es möglich, bei einer erkannten Annäherung die Betriebsgeschwindigkeit eines Stellvorgangs, z.B. die Schließgeschwindigkeit eines Verdecks abzusenken und eine Motorstrombegrenzung zu aktivieren.

Die Dynamik des Stellvorgangs kann durch verschiedenste, mit dem Stellvorgang korrespondierende Effekte ermittelt werden. Es ist auch möglich, Messsysteme, z.B. Impulsgeber, Drehgeber, oder linerar-Messsysteme, vorzusehen, über welche die Eigenbewegung der Bewegtkomponente erfasst werden kann. Als signifikant wird eine Änderung eines Sensorsignales erfasst die mit einer Dynamik erfolgt, die nicht ausschließlich durch die Eigendynamik der Bewegtkomponente verursacht ist.

Es ist möglich, die erfindungsgemäße Signalauswertung als Teil eines weitere Detektionskriterien berücksichtigenden Detektionskonzeptes in ein entsprechendes System zu implementieren. Neben dem vorgenannten Dynamikkriterium können dabei insbesondere auch die hinsichtlich des Näherungszustands an sich gewonnenen Messsignale ausgewertet werden.

Bei einem Hecklappenschutzsystem ist es insbesondere möglich, mehrere Detektionszonen zu realisieren und Asymmetrien zwischen den Ergebnissen der einzelnen Detektionszonen hinsichtlich Dynamik, oder Intensität als abschaltrelevante Ereignisse zu klassifizieren und hierauf basierend entsprechende Ausgangssignale zu generieren. Die Detektion der Asymmetrien kann erfolgen, indem im Rahmen des Bewegungsablaufs sich symmetrisch ändernde Sensorsysteme derart gekoppelt sind, dass sich im Regelbetrieb eine Auslöschung ergibt, und nur bei asymmetrischen Detektionsereignissen eine entsprechende Signalausgabe erfolgt.

Vorzugsweise werden über die Referenzdynamik nicht-lineare Zusammenhänge der Änderung der Sensorsignale und der Bewegung der Bewegtkomponenten kompensiert.

Es ist möglich, über die Referenzdynamik zulässige der Änderung der Sensorsignale durch Wechselwirkung mit stationären Nachbarschaftssystemen zu kompensieren.

Die Erfindung richtet sich weiterhin auch auf ein System zur Erfassung der Annäherung vitaler Objekte an Bewegtkomponenten die als solche in einem Stellbereich verfahrbar sind, mit:
einer Elektrodeneinrichtung,
einem LC-Netzwerk das mit der Elektrodeneinrichtung gekoppelt ist,
einem Referenzsystem das indikativ ist, für Abhängigkeiten zwischen der Kapazität der Elektrodeneinrichtung und verschiedenen Systemstellzuständen,
einer Stelleinrichtung zur Beeinflussung des LC-Netzwerkes nach Maßgabe des Referenzsystems derart, dass die Beaufschlagung der Elektrodeneinrichtung auf den momentanen System-Stellzustand hinreichend abgestimmt ist, und
einer Auswertungsschaltung zur Auswertung des Betriebs des LC-Netzwerkes, und hierauf basierenden Generierung eines Auswertungsresultates.

Die Auswertungsschaltung kann mit einem Mischer ausgestattet sein, über welchen die am LC-Netzwerk anliegende Frequenz mit der Frequenz eines Mischoszillators gemischt wird.

Die Mischfrequenz kann nach Maßgabe der Dynamik der Bewegtkomponenten variiert werden. Die Auswertungsschaltung kann derart ausgebildet sein, dass diese eine Extraktion von Signalen, die als solche nicht durch den Systemstellzustand veranlasst sind, nach Beimischung der Mischfrequenz erfolgt.

Es ist möglich, einen kapazitiv sensitiven Oszillator direkt (z.B. direkter Anschluss an das Metallische Objekt) oder indirekt (Aufbringung eines leitenden Gegenstandes) an das bewegliche Objekt anzukoppeln. Der Oszillators ist vorzugsweise so gestaltet, dass er über einen weiten Bereich an das Objekt bzw. an unterschiedlichste Objekte anpassbar ist, so dass ein hoher Dynamikbereich erzielt wird und stellvorgangsbedingte Änderungen des Objekts kompensiert werden können.

Gemäß einem besonderen Aspekt der Erfindung ist es möglich, das Schaltungssystem so aufzubauen und zu konfigurieren, dass zwischen zwei Detektionsverfahren umgeschaltet werden kann (PLL- und Frequenzanalyseverfahren). Dadurch ist eine schnelle Kompensation der Bewegung des Objekts und die ständige Detektierbarkeit von außergewöhnlichen Vorfällen (z.B. Annäherung eines Menschen) möglich.

### Die erfindungsgemäße Lösung

Ein redundant arbeitendes Sensorsystem nach einem kapazitiv/resistiven Prinzip sorgt für eine sichere Kontrolle der Schließ- und Öffnungsvorgänge von Heckklappen und Heckdeckeln, Kofferraumdeckeln, automatisch öffnenden Türen usw. Dabei werden sowohl die Schließkanten und sonstigen Gefahrenbereiche eines Kofferraums als auch die bewegten Fahrzeugteile (Deckel) mit elektrischen Wechselfeldern beaufschlagt. Deren Frequenz- oder Pegeländerung wird im Zusammenhang mit einem Öffnungs- oder Schließvorgang analysiert, Behinderungen der Vorgänge können ermittelt werden und führen zum Anhalten oder Reversieren der Bewegung. Bei geöffneter Heckklappe kann eine sich annähernde Person rechtzeitig gewarnt werden, um z.B. Kopfverletzungen durch Anstoßen zu verhindern. Der Schließvorgang kann durch eine bestimmbare Geste eingeleitet werden, sodass Schalter zum Schließen entfallen können, was sich kostengünstig auf die Konstruktion auswirkt. Die Erfindung verwendet gleichzeitig Verfahren der Frequenzänderung und der Pegelmessung. Letztere soll auch dazu dienen zu verhindern, dass eine sich automatisch öffnende Heckklappe gegen ein anderes Fahrzeug oder gegen eine Garagendecke stößt. Hilfsweise können hierfür auch Ultraschall, Infrarot oder andere Phasenmessverfahren etc. verwendet werden.

Weitere Einzelheiten und Merkmale der Erfindung ergeben sich aus der nachfolgenden Beschreibung in Verbindung mit der Zeichnung. Es zeigt:
- **Figuren 1a, 1b**: zeigen eine erste Ausführungsform einer erfindungsgemäßen Erfassungselektrodeneinrichtung als Schnittbild;
- **Figuren 2a, 2b**: zeigen eine weitere Anordnung, wobei das Sensorelement **SD** ringförmig entlang der Heckklappen-Schließkanten eines Kraftfahrzeuges angeordnet ist;
- **Figur 3**: eine Schemadarstellung zur Veranschaulichung weiterer Einzelheiten der Erfindung;
- **Figur 4**: ebenfalls eine Schemadarstellung zur Veranschaulichung weiterer Einzelheiten der Erfindung;
- **Figur 5**: eine Schemadarstellung zur Veranschaulichung eines, einen Multiplexer umfassenden Schaltungsaufbaus;
- **Figur** 6: eine Schemadarstellung zur Veranschaulichung eines Signalpegelverlaufs;
- **Figur 7**: eine weitere Schemadarstellung zur Veranschaulichung eines, erfindungsgemäßen Schaltungsaufbaus;
- **Figur 8**: eine Schemadarstellung zur Veranschaulichung eines, weiteren Schaltungsaufbaus;
- **Figur 9**: eine Skizze zur Veranschaulichung der Unterbringung einer erfindungsgemäßen Schaltung in einem ASIC.

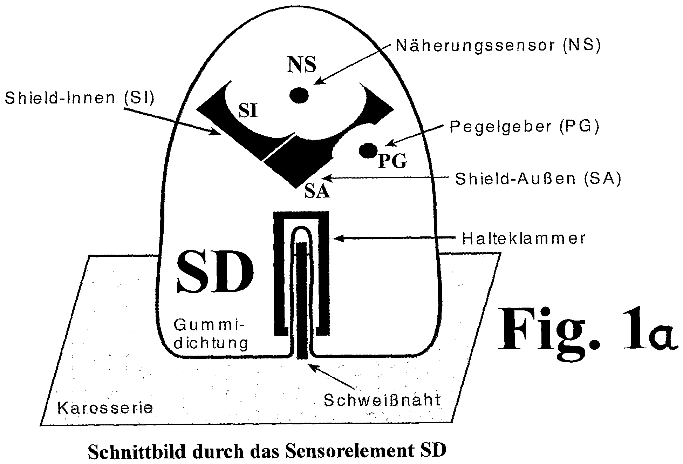

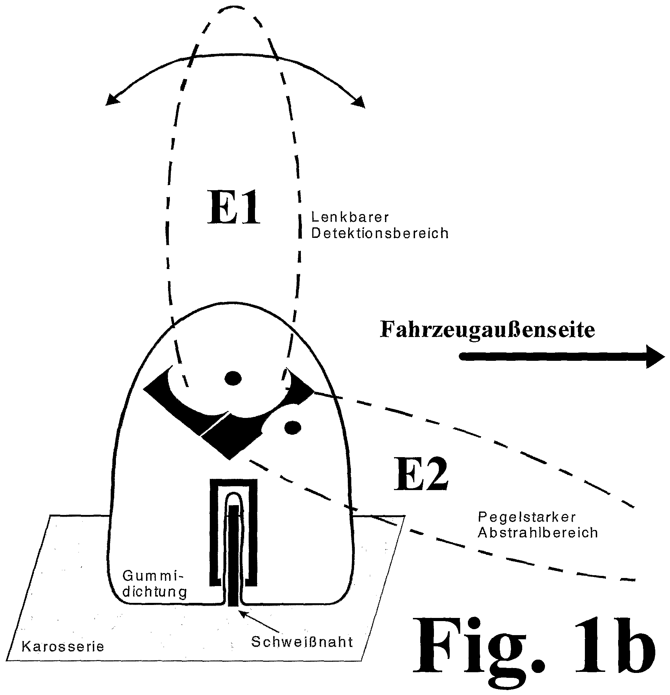

Die Figuren 1a und 1b veranschaulichen eine erste beispielhafte Ausführungsform der Erfindung. Die Schließkantendichtung **SD** eines Heckdeckels ist hier so gestaltet, dass sich in ihr über die gesamte Länge verschiedene Zonen unterschiedlicher Leitfähigkeit befinden. Nichtleitendes Material umschließt dabei immer leitende Zonen. Ein gewisser elektrischer Widerstand des leitenden Materials **RM** ist dabei vorteilhaft. Dazu können unterschiedlich leitende und nichtleitende Gummimischungen und/oder Kunststoffe verwendet werden, die dauerhaft miteinander verbunden sind. Wenn eine Dichtungsfunktion unerwünscht ist, kann diese auch entfallen.

Die äußerste leitende Zone befindet sich im Zentrum von **SD** und bildet den eigentlichen Näherungssensor **NS.** Ihn umgeben von einem dielektrischen, nichtleitenden Material getrennt (Dielektrikum) Zonen, die als richtungsgebende Shielde arbeiten sollen, **SI** und **SA.** Diese sind, wie aus **Fig. 1** ersichtlich, wannenförmig um das eigentliche Sensorelement **NS** angeordnet. Nach außen hin befindet sich ein sogenanntes Signalpegelabstrahlelement **PG,** das es gestattet, elektrische Wechselfelder vom Fahrzeug weg in den Raum oder gegen Erde (**EG**) abzustrahlen.

**Fig. 1b** zeigt die Ausprägung der Wechselfelder, wo bei **E1** durch Variation der Shieldpegel (Shield) über **P1** es möglich ist, den sensitiven Annäherungsbereich (Detektionsbereich) in Richtung der Deckelschließkante zu lenken. **E2** wird mit erhöhtem Pegel mit Hilfe von **SA** nach außen (vom Fahrzeug weg) abgestrahlt.

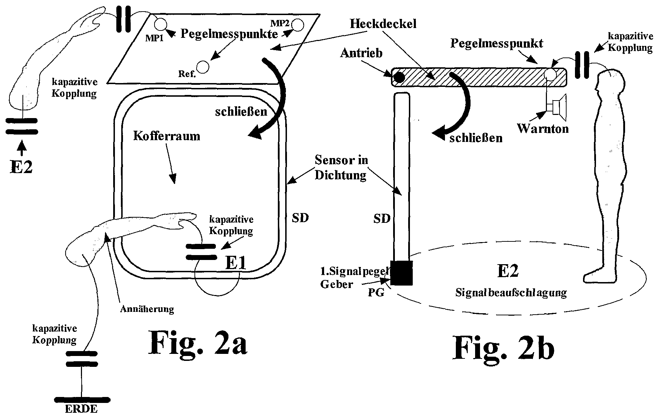

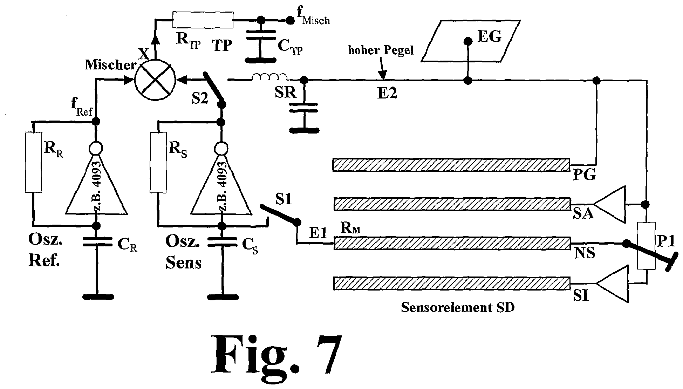

**Fig. 2a** zeigt eine weitere Anordnung, wobei das Sensorelement **SD** ringförmig entlang der Schließkanten eines Kraftfahrzeuges (Heckbereich) angeordnet ist. Ein erster einfacher Oszillator **OszSens** (**vergl.** **Fig.7**) erzeugt eine Frequenz von beispielsweise 200 kHz. Er wird an mehreren Punkten der Sensoreinrichtung zugefügt und zwar dergestalt, dass das innere Sensorelement **NS** auf kapazitive Veränderungen reagieren kann (**E1**) während das äußere Abstrahlelement **PG** das Frequenzsignal mit einem erhöhten Pegel ausgeben kann (**E2**). Da das Sensorelement aus leitendem Gummi oder Polymer besteht, hat es einen gewissen Widerstand. Dies ist sinnvoll und vorteilhaft, um die aus dem Generator entstehenden Oberwellen zu filtern und eine EMV-gerechte Arbeitsweise zu gewährleisten. Außerdem gestattet das resistive Material noch weitere erfindungsgemäße Vorteile, wie z.B. die Feststellung der Position eindringender Gliedmaßen usw. Bei Annäherung menschlicher Gliedmassen an das Sensorelement **SD** bringen diese eine zusätzliche Kapazität über **NS** ein, was die Frequenz des ersten Oszillators entsprechend absinken lässt. Eine Annäherung an **NS** lässt sich z.B. aus 20 cm Entfernung feststellen.

Im Heckdeckel (**Fig. 2a**) befinden sich Sensorpunkte **MP1, MP2** und **Ref,** die einer Pegelmesseinrichtung zugeführt werden. Diese ist in der Lage, den Signalpegel der abgestrahlten Frequenz zu messen und an eine Auswerteeinheit weiterzuleiten. Außerdem sind diese Messpunkte in der Lage, zusätzliche Pegel festzustellen, die z.B. von sich herannähernden Personen mit deren Gliedmaßen eingebracht werden, und vom eigentlichen Bewegungsvorgang zu unterscheiden, da der Pegel bei Annäherung von Gliedmaßen übermäßig und nachweisbar erhöht wird. Dazu ist es notwendig, dass eine sich nähernde Person mit dem Signalpegel beaufschlagt wird. Dies ist eine der Aufgaben des Abstrahlelementes **PG,** das mit Hilfe der Shieldelektrode **SA** ein elektrisches Wechselfeld nach außen in Richtung der betreffenden Person aussendet (**Fig. 2b**). Es ist möglich, im Heckdeckel einen Pegelmesspunkt als Referenzpunkt **(Ref)** einzurichten, um sicherzustellen, dass überhaupt ein Signalpegel erfasst wird und der Sensor einwandfrei arbeitet. An diesem Referenzpunkt kann auch die Position der Heckklappe ermittelt werden, die zu jedem Zeitpunkt einem bestimmten Pegelwert entsprechen muss.

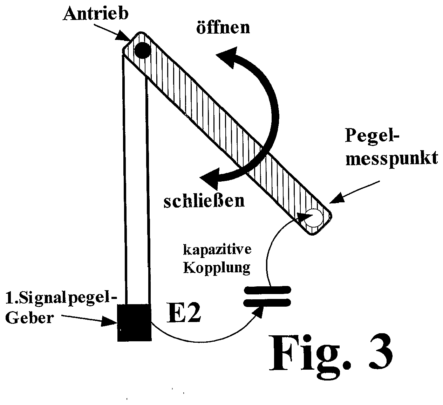

Wie aus Figur 3 ersichtlich, sind die Messpunkte so angeordnet, dass bei einem ordnungsgemäßen Schließen oder Öffnen der Heckklappe an allen Punkten eine gleichmäßige Pegeländerung stattfindet.

Sollte an einer Stelle ein leitendes Objekt, z.B. ein Mensch sein, so nimmt dieser den von der Schließkantendichtung abgestrahlten Frequenzpegel **E2** auf und führt ihn (u.a.) an den naheliegendsten Messpunkt weiter, was zu einem erhöhten Pegel an dieser Stelle führt (vgl. **Fig. 2b**). Dies wird festgestellt und die Heckklappe wird gestoppt bzw. der Schließ- oder Öffnungsvorgang kann reversiert werden. Da eine Einklemmgefahr in besonderem Maße gegeben ist, wenn sich der Heckdeckel der Schließkante (und damit der erfindungsgemäßen Sensordichtung) nähert, wirkt hier die redundante Arbeitsweise der Erfindung, da beim Einbringen von Gliedmaßen über **NS** eine Frequenzänderung und durch die Messpunkte im Heckdeckel eine Pegel-/Quotientenänderung messbar wird. Stellvorgangsbedingte Kapazitätsänderungen können durch die ebenfalls stellvorgangsbedingten Pegeländerungen kompensiert werden.

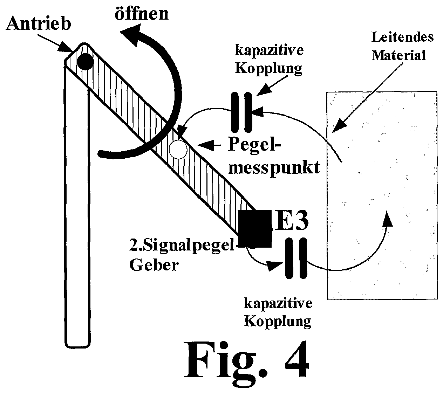

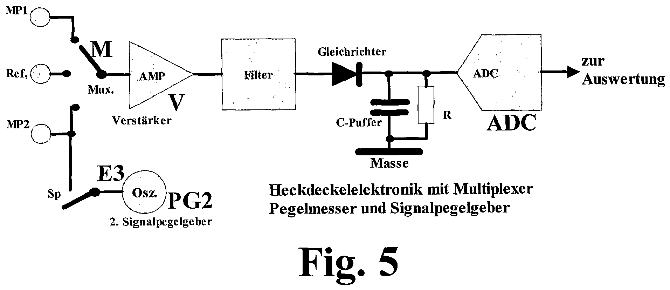

Befindet sich ein erfindungsgemäß ausgestattetes Fahrzeug in der Nähe eines anderen Fahrzeugs, so kann beim Öffnungsvorgang festgestellt werden, ob der Pegel **E2** etwa von diesem aufgenommen und an die Heckklappe weitergegeben wird (**Fig. 4**). Somit wird verhindert, dass die Heckklappe unter Umständen gegen das Fahrzeug anschlägt. Es kann auch verwendet werden, wenn sich die Heckklappe weit öffnet und die Gefahr besteht, dass sie an die Garagenwand oder Decke anschlägt. Hierzu muss an der Gefahrenstelle ein leitender Streifen (Alufolie etc.) angebracht werden, damit eine sogenannte Pegelbrücke entsteht. Öffnet sich die Klappe, so wird abgestrahlte Energie von einem Punkt an die Wand oder Garagendecke abgegeben. Nähert sich die Heckklappe nun dem Folienstreifen, so wird der Pegel an beiden Punkten verstärkt erzeugt. Es ist ebenfalls möglich, dass z.B. einer der relevanten Sensorpunkte (z.B. **MP2)** kurzzeitig durch einen Generator **PG2** mit einem Signal **E3** beaufschlagt wird und somit selbst zum Abstrahlpunkt wird, während der andere Sensorpunkt **MP1** als der gegenüberliegende für die Pegelmessung verwendet wird. Bei Bewegung in einem normalen Dielektrikum wird sich der Pegel nicht ändern. Bei Annäherung an eine Metallfläche (oder an einen Menschen) wird eine kapazitive Brücke geschlossen. Der Pegel erhöht sich am Messpunkt, was zur Abschaltung führt (oder Reversion der Heckklappe). **Fig. 5** zeigt ein entsprechendes Blockschaltbild der Elektronik.

### Verhalten bei nicht-leitenden Objekten im Schließbereich

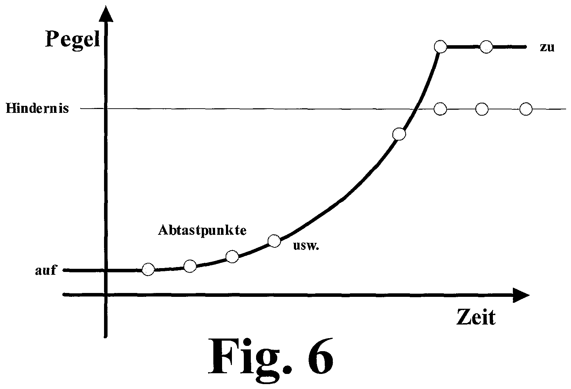

Es ist möglich, dass in den Bereich der Schließkanten oder des Öffnungsradius' Gegenstände hingelangen, die nichtleitend sind und somit keine Kapazitäts- oder Pegeländerung hervorrufen können. Hierfür ist der in der Klappe eingebaute Referenzpunkt **Ref** von besonderer Bedeutung. Er erlaubt zu jeder Zeit der Bewegung, eine Änderung des Pegels festzustellen. Sollte keine Änderung feststellbar sein, ist dies ein Nachweis dafür, dass keine Bewegung mehr erfolgt und die Heckklappe bzw. der Kofferraumdeckel von einem nichtleitenden Objekt in irgendeiner Weise festgehalten wurde (Einklemmsituation). Um wetterbedingte Pegeländerungen auszuschließen, können die an dem Heckdeckel angebrachten mehreren Sensorpunkte auch untereinander abwechselnd als Referenz dienen und so einen Quotienten bilden, der für jede Stellung der sich öffnenden oder schließenden Klappe einen einzigen, wetterunabhängigen Wert liefert. Ist keine Änderung zwischen zwei aufeinander folgenden Pegelmessungen feststellbar, so ist die Klappe durch mechanische Einwirkung angehalten worden. Dies kann auch geschehen, wenn der Schließvorgang ordnungsgemäß abgeschlossen war oder der Öffnungsvorgang seine Endposition erreicht hat und die Klappe sich nicht weiter bewegen kann (**Fig.6**). Dies ist vorteilhaft, wenn diese Punkte in einer Auswerteeinrichtung dazu führen, dass der Antrieb der Heckklappe abgeschaltet wird. Endschalter können somit entfallen. Während des Schließ- oder Öffnungsvorganges hindernde Elemente führen dazu, dass die Klappe ihre Bewegung nicht weiter fortsetzen kann, was den Motor normalerweise dazu veranlassen würde, über seine Übersetzung Kräfte aufzubauen, die zu einer Beschädigung oder Zerstörung von Gegenständen führen kann. Dies soll durch die Referenzpegel verhindert werden, die dann keine Änderung mehr zeigen, was ein sicheres Indiz dafür ist, dass ein nichtleitender Gegenstand eingeklemmt wurde. Ein leitender Gegenstand wird im Vorfeld als solcher erkannt, sodass ein Einklemmen hier nicht möglich ist. Dies gilt insbesondere für menschliche Gliedmaßen.

Die Abstrahlung des Sensorpegels **E2** vom Generator **PG** kann auch über eine Elektrode **EG** gegen den Boden (Erde = Ground) erfolgen. Ähnlich wie beim Blitzschlag entsteht im Boden eine Trichterspannung, die eine sich herannähernde Person mit den Füßen aufnimmt und mit den Gliedmaßen oder dem Kopf an sich an die bewegende Heckklappe weitergeben kann. Wird sie dort festgestellt, ist das ein sicherer Nachweis dafür, dass sich die Person in einer Gefahrensituation befindet. Das Dach kann angehalten oder reversiert werden. Es ist im Vorfeld möglich, die Person durch ein akustisches Signal zu warnen. Dies ist sinnvoll, wenn die Person z.B. Gegenstände in das Fahrzeug transportiert, die ihre Sicht verdecken und die Gefahr besteht, dass sie sich den Kopf an der Heckklappe anschlagen kann, was durch einen Warnton verhindert werden könnte. Dieser Ton kann auch einen Fahrer informieren, dass z.B. ein Kind sich (z.B. vom Fahrer unbemerkt) vor der sich öffnenden Heckklappe befindet. Um ein Pegelsignal einwandfrei identifizieren zu können ist es auch möglich, dieses mit Daten oder Frequenzen zu modulieren. Dies erscheint sinnvoll, um Störungen entgegenzuwirken.

### Beispielhafte Schaltungsauslegung

**Fig. 7** zeigt eine Schaltung, die im wesentlichen aus einem Oszillator **OszSens** besteht, der aus einem Inverter (Schmitt-Trigger) gebildet wurde (RC-Oszillator). Der Kondensator **CS** bildet dabei mit Hilfe des Widerstandes **RS** die Grundfrequenz. Über einen elektronischen Schalter **S1** ist diese Schaltung mit dem Sensorelement **NS** der Schließkantendichtung verbunden (**E1**). Gleichzeitig sind einstellbare Shieldpuffer (**SI, SA**) mit den beiden Shielden verbunden. Die Einstellung geschieht beispielsweise über ein digitales Potentiometer (**P1**). Der Ausgang des Oszillators **OszSens** ist über den Schalter **S2** zum einen mit einer Mischstufe (**X**) und zum anderen mit einer Pegelerhöhungseinrichtung, z.B ein Serienresonanzkreis **SR** verbunden, dessen Ausgang (**E2**) an die Außenabstrahleinrichtung **PG** des Sensorelementes geführt ist. Ein Referenzoszillator **OszRef** bildet einen weiteren Part der Sensoreinrichtung. Sein Ausgang ist ebenfalls mit der Mischstufe **X** (z.B XOR) verbunden. An deren Ausgang befindet sich ein Tiefpass **TP,** der nur den Betrag der Mischfrequenz von beiden Oszillatoren ausgeben kann.

Sind beide Oszillatoren gleich eingestellt, so ist die Mischfrequenz null. Beim Einbringen von Gliedmaßen reduziert sich die Frequenz von **OszSens** durch die zusätzliche Kapazität, was zu Folge hat, das die Mischfrequenz nach **TP** dem Änderungswert entsprechend ansteigt.

Über einen Komparator oder Schmitt-Trigger kann das Signal des Tiefpasses einer Auswerteeinheit (z.B. Mikrocontroller) zugeführt werden. Diese ist auch in der Lage, über D/A-Wandler oder digitale Signale sowie interne Oszillatoren (z.B. PWM) eigene Referenzfrequenzen zu erzeugen oder die Frequenzen der anderen Oszillatoren zu verstellen **(VCO-Prinzip).** Dies ist sinnvoll, um einen automatischen Abgleich (NullAbgleich) durchzuführen. Dazu müssen die Widerstände **RS** des Sensoroszillators **OszSens** und des Mischreferenzoszillators **OszRef** (**RR**) elektrisch verstellbar sein. Hierzu eignen sich digitale Potis oder Halbleitermaterialien, deren Widerstand z.B. durch Spannung/Strom, Licht oder Magnetismus verändert werden kann. Des weiteren sind in dem beweglichen Heckdeckel (**Fig. 2a**) Sensorpunkte angebracht (**MP1, Ref, MP2** usw.), die von einem Sequenzer, Multiplexer oder Mikrocontroller gemultiplext (**M**), ein Signal aufnehmen und an einen Verstärker **V** weiterleiten können **(vergl.** **Fig. 5**). Dort werden sie verstärkt und der Pegel wird gleichgerichtet, sein Wert gemessen und über einen **ADC** der Auswerteinrichtung (z.B. Mikrocontroller) zugeführt. Ein geeignetes Programm kann dort feststellen, ob die Pegeländerung einem Schließ- oder Öffnungsvorgang entspricht. Dies ist der Fall, wenn sie mindestens an den zwei Außenpunkten **(MP1, MP2)** die gleichen Werte aufweist; der Quotient ist dann 1.

Sollten von leitenden Gegenständen oder Personen Pegel **E2 oder E3** in der Nähe eines Messpunktes eingebracht werden, so ist eine Differenz feststellbar (Quotient <> 1). Es kann daraufhin der Deckelantriebsmotor angehalten oder reversiert werden. Es ist daher sinnvoll, den gleichen Controller auch für die Steuerung des für die Klappen/Deckelbewegung notwendigen Motors (Elektromotor, Kompressor etc.) zu verwenden. Ferner ist es möglich, an den Eingang des Controllers mindestens eine Taste anzulegen, die das Öffnen und Schließen gestattet. Eine (z.B serielle) Datenzuführung erlaubt es Datenfunkempfänger (z.B. Bluetooth, WLAN etc.) oder andere Fernsteuerempfänger anzuschalten, um z.B. eine Heckklappe auch aus der Entfernung ferngesteuert (z.B. mit dem Handy, Funkschlüssel etc.) öffnen und schließen zu können.

### Beispielhafte Gestaltungsmöglichkeiten der Erfindung

Die anliegenden Signalpegel können auch absolut gemessen und mit einer gespeicherten Kennlinie verglichen werden.

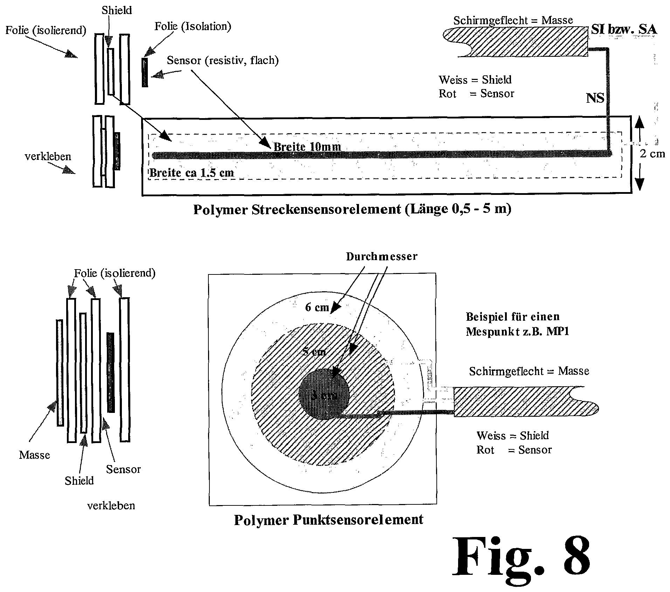

Die Erfindung kann auch als **Ergänzung** zu herkömmlichen taktilen oder anderen Klemmschutzeinrichtungen verwendet werden oder **diese ganz ersetzen.** Dazu kann in der Nähe der Gefahrenstelle(n) z.B. mindestens ein mehrschichtiger Klebestreifen (z.B. Polymer) und/oder mehrschichtiger zum Teil resistiver Farbauftrag aufgebracht werden, deren Schichten entsprechend angeordnet das erfindungsgemäße Sensorelement **SD** bilden (**Fig.8**). Auch Carbonfasern (Kohlefasern) eignen sich als Sensorelement. Die leitenden und nichtleitenden Schichten können wie in **Fig. 1** oder ähnlich angeordnet sein.

Als Abstrahlelektrode gegen Erde **EG** kann beispielsweise eine dünne Metallfolie (z.B. Kupfer) verwendet werden, die isoliert z.B. unter dem Fahrzeug angebracht ist.

Es ist möglich, einen bestimmbaren Bereich einer geöffneten Heckklappe für einen "virtuellen Schließbefehl" zu verwenden, wenn an dieser Stelle ein durch menschliche Gliedmaßen eingebrachter Signalpegel (in Relation zu den anderen Messpunkten) festgestellt wird. Dort könnte ein Sticker mit der Aufschrift "hier schließen" etc. angebracht sein. Wird eine Hand in dessen unmittelbare Nähe gebracht, so kann dies erfindungsgemäß festgestellt und der Schießvorgang eingeleitet werden.

Die Detektionsrichtung von **NS** kann mittels Steuerung der Shielde (**SI und SA**) der sich während eines Schließvorgangs ändernden Gefahrensituation entsprechend vorteilhaft verändert werden.

An Decken geführte Heizungs- bzw. Lüftungsschächte können z.B. in Tiefgaragen mit einem Pegel (ähnl. **E3**) durch einen externen Generator beaufschlagt werden, um zu verhindern, das dort Heckklappen anschlagen und dadurch Beschädigungen hervorgerufen werden.

Eine mit Signalpegel beaufschlagte Folie kann im Kofferraum (o. Ladefläche) mitgeführte Tiere (z.B.) Hunde vor Verletzungen schützen, wenn sich Klappen schließen und das Tier z.B. entweichen will.

Da das verwendete resitive Material **RM** entlang seiner Ausprägung einem immer höheren Widerstand entspricht, kann dieser z.B. als Spannungsteiler wirkend vorteilhaft an bestimmbaren Stellen mehr Signalpegel abgeben als an anderen. Dies gilt insbesondere auch für das Abstrahlelement **E2.** Der nachzuweisende Spannungsabfall kann bei Schließ- bzw. Öffnungsvorgängen auch Hinweise auf die Heckklappenposition geben und für die redundante Arbeitsweise der Erfindung herangezogen werden.

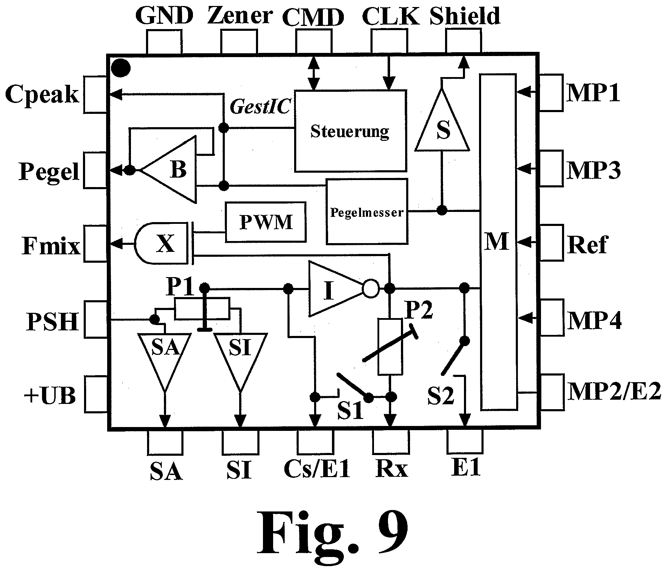

Die Sensorelektronik für **SD** und die Pegelmessung können in einem integrierten Baustein (z.B. ASIC) untergebracht werden (**Fig.9**) oder als Polymerelektronik direkt z.B. auf eine erfindungsgemäße Sensorfolie aufgedruckt sein.

## Patentansprüche

1. Detektionssystem mit:
- einer Modulationseinrichtung mit einem Oszillator zur Generierung einer Wechselspannung welche einem Mischer zugeführt wird,
- einem Referenzoszillator dessen Ausgangsfrequenz dem Mischer zugeführt wird;
- einer Feldbereitungselektrode (PG) die mit der Modulationseinrichtung koppelbar ist, zur Generierung eines räumlich ausgedehnten Anregungsfeldes,
- einer ersten Abschirmelektrode (SA) welche benachbart zur Feldbereitungselektrode angeordnet ist;
- einer Erfassungselektrode (NS) zur Erfassung eines feldelektrischen Effekts in einem sich entlang der Erfassungslektrode (NS) erstreckenden Detektionsbereich welche mit einem Modulationseingang der Modulationseinrichtung gekoppelt ist,
- einer zweiten Abschirmelektrode (SI) welche benachbart zur Erfassungselektrode (NS) angeordnet sind;
- wobei die Feldbereitungselektrode (PG) und die Erfassungselektrode (NS) in Nachbarschaft zueinander angeordnet sind und die Erfassungselektrode (NS) und die Feldbereitungsstruktur (PG) voneinander weitgehend durch die erste Abschirmelektroden (SA) abgeschirmt wird und die erste und zweite Abschirmelektrode (SA, SI) die Erfassungselektrode (NS) weitgehend umrahmen, wobei die erste und zweite Abschirmelektrode (SA, SI) mit der Modulationseinrichtung derart koppelbar sind dass ein der zweiten Abschirmelektrode (SI) zugeführtes Signal bezüglich dem der ersten Abschirmelektrode zugeführten Signal abgeschwächt ist,
wobei durch eine Überbrückung des Anregungsfeldes innerhalb des Detektionsbereiches durch ein zu detektierendes Objekt, eine Frequenz des Oszillators der Modulationseinrichtung derart verändert wird dass diese Änderung an einem Ausgang des Mischers detektierbar ist.

2. Detektionssystem nach Anspruch 1 , **dadurch gekennzeichnet, dass** die Feldbereitungselektrode (PG) und die Erfassungselektrode (NS) im Schliessspaltbereich eines Kofferraumdeckels angeordnet sind.

3. Detektionssystem nach Anspruch 1 oder 2, **dadurch gekennzeichnet, dass** die Feldbereitungselektrode (PG) und die Erfassungselektrode (SI) in eine Dichtungseinrichtung eingebunden sind.

4. Detektionssystem nach wenigstens einem der Ansprüche 1 bis 3, **dadurch gekennzeichnet, dass** die Feldbereitungselektrode (PG) und die Erfassungselektrode (NS) aus einem leitfähigen Kunststoffmaterial gefertigt sind.

5. Detektionssystem nach wenigstens einem der Ansprüche 1 bis 4, **dadurch gekennzeichnet, dass** die erste und zweite Abschirmungselektroden (SA, SI) an die Modulationseinrichtung derart angekoppelt sind, dass an diese eine hinsichtlich Phasenlage und Spannungsabstand gegenüber der Erfassungselektrode und/oder der Feldbereitungselektrode modulierte Spannung anlegbar ist.

6. Detektionssystem nach wenigstens einem der Ansprüche 1 bis 5, **dadurch gekennzeichnet, dass** die räumliche Gestalt des Detektionsbereiches und/oder des Anregungsfeldes über einen Spannungsabstand der an diesen Elektroden anliegenden Spannungen gestaltet, insbesondere variiert wird.

7. Detektionssystem nach wenigstens einem der Ansprüche 1 bis 6, **dadurch gekennzeichnet, dass** der Erfassungselektrode (NS) und/oder der Feldbereitungselektrode (PG) mehrere Abschirmelektroden (SA, SI) zugeordnet sind und dass durch Abstimmung des Spannungsabstandes an den jeweiligen Abschirmelektroden (SA, SI) die Gestalt, und/oder die Ausrichtung des Anregungs oder Detektionsbereiches variiert wird.

8. Detektionssystem nach wenigstens einem der vorhergehenden Ansprüche, **dadurch gekennzeichnet dass** die Modulationseinrichtung einen Inverteroszillator (OSz. Sens) aufweist.

9. Detektionssystem nach Anspruch1, wobei eine Fläche der Erfassungselektrode (NS) kleiner als eine Fläche der Abschirmelektroden (SI, SA) ist..

10. Detektionssystem nach Anspruch1, **gekennzeichnet durch** einen Tiefpass (TP) welcher dem Mischer nachgeschaltet ist.

11. Detektionssystem nach wenigstens einem der vorhergehenden Ansprüche 8-10, **gekennzeichnet durch** eine Schalteinrichtung (S2) welche den Ausgang des Inverteroszillators (Osz. Sens.) mit dem Mischer oder der Feldbereitungselektrode koppelt.

12. Detektionssystem nach wenigstens einem der vorhergehenden Ansprüche, **dadurch gekennzeichnet dass** die Feldbereitungselektrode (PG) über eine Pegelerhöhungseinrichtung (SR) mit der Modulationseinrichtung gekoppelt ist.

13. Detektionssystem nach Anspruch 12, **dadurch gekennzeichnet dass** die Pegelerhöhungseinrichtung durch einen Serienresonanzkreis (SR) gebildet wird.

14. Kofferraumdeckeleinrichtung für ein Kraftfahrzeug mit einem innerhalb eines Kofferraumdeckelbahnraumes verlagerbaren Kofferraumdeckel, einem Bewegungsmechanismus zur Führung des Kofferraumdeckels in jenem Kofferraumdeckelbahnraum und einem Detetektionssystem gemäß einem der vorhergehenden Ansprüche, wobei im Falle eines seitens des Detektionssystems erfassten und als gefährdungsrelevant zu klassifizierten Präsenzzustands eines Objektes der Bewegungsmechanismus in einen Betriebszustand verbracht wird in welchem ein Verletzungsrisiko infolge der Bewegung des Kofferraumdeckels vermieden, oder abgesenkt ist.

## Claims

1. A detection system, comprising:
- a modulation device having an oscillator for generating an alternating voltage which is supplied to a mixer,
- a reference oscillator whose output frequency is supplied to the mixer;
- a field preparation electrode (PG) which can be coupled to the modulation device for generating a spatially extended excitation field,
- a first shielding electrode (SA) which is arranged adjacent to the field preparation electrode;
- a detection electrode (NS) for detecting a field electric effect in a detection area extending along the detection electrode (NS) and coupled to a modulation input of the modulation device,
- a second shielding electrode (SI) which is arranged adjacent to the detection electrode (NS);
- wherein the field preparation electrode (PG) and the detection electrode (NS) are arranged adjacent to one another and the detection electrode (NS) and the field preparation structure (PG) are largely shielded from one another by the first shielding electrode (SA) and the first and second shielding electrodes (SA, SI) largely frame the detection electrode (NS), wherein the first and second shielding electrodes (SA, SI) can be coupled to the modulation device such that a signal supplied to the second shielding electrode (SI) is attenuated with respect to the signal supplied to the first shielding electrode,
wherein by means of a bridging of the excitation field within the detection area by an object to be detected a frequency of the oscillator of the modulation device is changed such that this change is detectable at an output of the mixer.

2. The detection system of claim 1, **characterized in that** the field preparation electrode (PG) and the detection electrode (NS) are arranged in the closing gap region of a trunk lid.

3. The detection system of claim 1 or 2, **characterized in that** the field preparation electrode (PG) and the detection electrode (SI) are integrated into a sealing device.

4. The detection system of at least one of claims 1 to 3, **characterized in that** the field preparation electrode (PG) and the detection electrode (NS) are manufactured of a conductive plastic material.

5. The detection system of at least one of claims 1 to 4, **characterized in that** the first and second shielding electrodes (SA, SI) are coupled to the modulation device such that a voltage modulated with respect to phase angle and voltage separation with respect to the detection electrode and / or the field preparation electrode can be applied.

6. The detection system of at least one of claims 1 to 5, **characterized in that** the spatial shape of the detection area and / or the excitation field is designed over a voltage difference of the voltages applied to these electrodes, in particular is varied.

7. The detection system of at least one of claims 1 to 6, **characterized in that** several shielding electrodes (SA, SI) are assigned to the detection electrode (NS) and / or the field preparation electrode (PG) and that by tuning the voltage difference at the respective shielding electrodes (SA, SI) the shape, and / or the orientation of the excitation or detection region is varied.

8. The detection system of at least one of the preceding claims, **characterized in that** the modulation device comprises an inverter oscillator (OSz. Sens.)

9. The detection system of claim 1, wherein an area of said detection electrode (NS) is smaller than an area of said shielding electrodes (SI, SA).

10. The detection system of claim 1, **characterized by** a low-pass filter (TP) which is connected downstream of the mixer.

11. The detection system of at least one of the preceding claims 8-10, **characterized by** a switching device (S2) which couples the output of the inverter oscillator (Osz. Sens.) with the mixer or the field preparation electrode.

12. The detection system of at least one of the preceding claims, **characterized in that** the field preparation electrode (PG) is coupled to the modulation device via a level increasing device (SR).

13. The detection system of claim 12, **characterized in that** the level increasing device is formed by a series resonant circuit (SR).

14. A trunk lid device for a motor vehicle comprising a trunk lid that can be moved within a trunk lid track space, a movement mechanism for guiding the trunk lid in that trunk lid track space and a detection system of one of the preceding claims, wherein in the event of a presence condition of an object detected by the detection system and classified as hazardous, the movement mechanism is transferred into an operating condition in which a risk of injury due to the movement of the trunk lid is avoided or lowered.

## Revendications

1. Système de détection, avec :
- un dispositif de modulation pourvu d'un oscillateur destiné à produire une tension alternative, laquelle est acheminée à un mélangeur,
- un oscillateur de référence dont la fréquence de sortie est acheminée au mélangeur ;
- une électrode de préparation de champ (PG) qui peut être couplée au dispositif de modulation pour la production d'un champ d'excitation étendu dans l'espace,
- une première électrode de blindage (SA), laquelle est disposée au voisinage de l'électrode de préparation de champ ;
- une électrode de détection (NS) destinée à la détection d'un effet de champ électrique dans une zone de détection s'étendant le long de l'électrode de détection (NS), laquelle est couplée à une entrée de modulation du dispositif de modulation,
- une deuxième électrode de blindage (SI), laquelle est disposée au voisinage de l'électrode de détection (NS) ;
- l'électrode de préparation de champ (PG) et l'électrode de détection (NS) étant disposées au voisinage l'une de l'autre, et l'électrode de détection (NS) et la structure de préparation de champ (PG) étant largement blindées l'une par rapport à l'autre par la première électrode de blindage (SA), et la première et la deuxième électrode de blindage (SA, SI) encadrant largement l'électrode de détection (NS), et la première et la deuxième électrode de blindage (SA, SI) pouvant être couplées avec le dispositif de modulation de telle sorte qu'un signal acheminé à la deuxième électrode de blindage (SI) est affaibli par rapport au signal acheminé à la première électrode de blindage,
dans lequel, par un pontage du champ d'excitation à l'intérieur de la zone de détection par un objet à détecter, une fréquence de l'oscillateur du dispositif de modulation est modifiée de telle sorte que cette modification peut être détectée sur une sortie du mélangeur.

2. Système de détection selon la revendication 1, **caractérisé en ce que** l'électrode de préparation de champ (PG) et l'électrode de détection (NS) sont disposées dans la zone d'interstice de fermeture d'un couvercle de coffre à bagages.

3. Système de détection selon la revendication 1 ou 2, **caractérisé en ce que** l'électrode de préparation de champ (PG) et l'électrode de détection (SI) sont intégrées dans un dispositif d'étanchéité.

4. Système de détection selon au moins l'une des revendications 1 à 3, **caractérisé en ce que** l'électrode de préparation de champ (PG) et l'électrode de détection (NS) sont fabriquées en matière plastique conductrice.

5. Système de détection selon au moins l'une des revendications 1 à 4, **caractérisé en ce que** les première et deuxième électrodes de blindage (SA, SI) sont couplées au dispositif de modulation de telle sorte qu'une tension modulée en matière de position de phase et d'intervalle de tension par rapport à l'électrode de détection et/ou à l'électrode de préparation de champ peut être appliquée au dispositif de modulation.

6. Système de détection selon au moins l'une des revendications 1 à 5, **caractérisé en ce que** l'agencement spatial de la zone de détection et/ou du champ d'excitation est agencé, en particulier modifié, par le biais d'un intervalle de tension des tensions appliquées à ces électrodes.

7. Système de détection selon au moins l'une des revendications 1 à 6, **caractérisé en ce que** plusieurs électrodes de blindage (SA, SI) sont affectées à l'électrode de détection (NS) et/ou à l'électrode de préparation de champ (PG), et **en ce que** l'agencement et/ou l'orientation de la zone de détection ou d'excitation est modifié(e) par l'adaptation de l'intervalle de tension sur les électrodes de blindage (SA, SI) respectives.

8. Système de détection selon au moins l'une des revendications précédentes, **caractérisé en ce que** le dispositif de modulation comporte un oscillateur inverseur (OSz. Sens).

9. Système de détection selon la revendication 1, dans lequel une surface de l'électrode de détection (NS) étant plus petite qu'une surface des électrodes de blindage (SI, SA).

10. Système de détection selon la revendication 1, **caractérisé par** un filtre passe-bas (TP), lequel est monté en aval du mélangeur.

11. Système de détection selon au moins l'une des revendications précédentes 8-10, **caractérisé par** un dispositif de commutation (S2), lequel couple la sortie de l'oscillateur inverseur (OSz. Sens) au mélangeur ou à l'électrode de préparation de champ.

12. Système de détection selon au moins l'une des revendications précédentes, **caractérisé en ce que** l'électrode de préparation de champ (PG) est couplée au dispositif de modulation par le biais d'un dispositif d'augmentation de niveau (SR).

13. Système de détection selon la revendication 12, **caractérisé en ce que** le dispositif d'augmentation de niveau est formé par un circuit résonnant en série (SR).

14. Dispositif de couvercle de coffre à bagages pour un véhicule automobile avec un couvercle de coffre à bagages pouvant être déplacé à l'intérieur d'un espace de trajectoire de couvercle de coffre à bagages, avec un mécanisme de mouvement destiné au guidage du couvercle de coffre à bagages dans cet espace de trajectoire de couvercle de coffre à bagages, et avec un système de détection selon l'une des revendications précédentes, dans lequel, dans le cas d'un état de présence d'un objet, détecté en provenance du système de détection et étant classé comme présentant un danger, le mécanisme de mouvement est conduit dans un état de fonctionnement dans lequel un risque de blessure par suite du mouvement du couvercle de coffre à bagages est évité ou abaissé.
